# EUROPÄISCHE PATENTSCHRIFT

(11) **EP 3 626 093 B1**
(45) Veröffentlichungstag und Bekanntmachung des Hinweises auf die Patenterteilung: **03.07.2024**
(21) Anmeldenummer: 18196175.6
(22) Anmeldetag: 24.09.2018
(51) Int. Cl.: A24F 47/00, H05B 3/26

(54) **HEIZELEMENT FÜR EIN SYSTEM ZUR BEREITSTELLUNG EINES INHALIERBAREN AEROSOLS**
HEATING ELEMENT FOR A SYSTEM FOR SUPPLYING AN INHALABLE AEROSOL
ÉLÉMENT CHAUFFANT POUR UN SYSTÈME DE FOURNITURE D'UN AÉROSOL INHALABLE

(43) Veröffentlichungstag der Anmeldung: 25.03.2020
(73) Patentinhaber: Yageo Nexensos GmbH, 63801 Kleinostheim (DE)
(72) Erfinder: Asmus, Tim, 63450 Hanau (DE); Dietmann, Stefan, 63450 Hanau (DE); Muziol, Matthias, 63450 Hanau (DE); Wienand, Karlheinz, 63741 Aschaffenburg (DE)
(74) Vertreter: Meissner Bolte Partnerschaft mbB

(56) Entgegenhaltungen:
- WO-A1-2012/171072
- WO-A2-2009/012239
- US-A1- 2017 280 777
- US-B1- 6 222 166

## Beschreibung

Die vorliegende Erfindung betrifft ein Heizelement und ein Verfahren zur Herstellung eines Heizelements für ein System zur Bereitstellung eines inhalierbaren Aerosols. Weiterhin betrifft die vorliegende Erfindung ein System zur Bereitstellung eines inhalierbaren Aerosols, sowie eine Verdampfer-Einheit für ein solches System.

Aus dem Stand der Technik sind Systeme mit Heizelementen zur Bereitstellung von inhalierbaren Aerosolen, die eine Substanz zur Bildung des Aerosols aufheizen, bekannt. Diese Systeme werden oft auch als Elektronische Zigarette, oder auch nur als E-Zigarette bezeichnet. Typischerweise weisen solche Systeme ein Mundstück sowie eine Verdampfer-Einheit, die ein Heizelement umfasst, auf. Abhängig von dem verwendeten System kann die Substanz ein nikotinhaltiges Produkt, wie Tabak oder ein tabakähnliches Produkt umfassen und kann flüssig, gasförmig oder fest sein. Es kann aber auch eine nikotinlose Substanz bereitgestellt werden. Das sich bildende Aerosol kann dann an einem nikotinhaltigen oder mit Nikotin versetzten Körper vorbeigeleitet werden, bzw. diesen Körper durchfluten, um das Aerosol mit Nikotin zu versetzen.

Auch wird im Allgemeinen die Substanz nicht wie in einer konventionellen Zigarette verbrannt, sondern lediglich erhitzt, um dadurch das inhalierbare Aerosol zu erhalten. Das Heizelement erhitzt hierbei die Substanz in einem Temperaturbereich von ungefähr 200°C bis 400°C, so dass das inhalierbare Aerosol entsteht, das von dem Benutzer des Systems inhaliert werden kann.

So sind aus dem Stand der Technik beispielsweise lanzen-, rohr-, oder stabförmige Heizelemente bekannt. Die Substanz zur Bildung des Aerosols wird mit diesen Heizelementen in Berührung gebracht.

Beispielsweise wird in der US5665262A ein rohrförmiges Heizelement beschrieben, das aus einer Metallhülse, einer Isolationsschicht auf der Metallhülse und einem darauf aufgebrachten Widerstandselement gebildet wird.

In der JP2014216287A wird ein Heizelement beschrieben, das aus einem dünnen Aluminiumrohr mit oxidierter Oberfläche gebildet wird. Um das dünne Aluminiumrohr ist ein Heizdraht gewickelt.

US20170215474A1 beschreibt ein rohrförmiges Heizelement mit einem perforierten Alu-Zylinder als thermischen Kontaktvermittler zwischen einem NiCd-Heizdraht, der um den Alu-Zylinder gewickelt ist. Das rohrförmige Heizelement wird mit der Substanz zur Bildung des Aerosols befüllt.

In der DE102016115574A1 wird ein rohrförmiges Heizelement mit einem Trägermaterial aus Glas oder einer Glaskeramik und mit metallischen Heizleiterstrukturen beschrieben.

Die US6222166B1 beschreibt ein Heizelement aus einem Metall mit einem hohem thermischen Ausdehnungskoeffizient von > 16x10E-16 /°C, z.B. kann das Material ein Aluminium-Material sein, mit einer dielektrischen Schicht, z.B. Al2O3, und einem darauf aufgebrachten Dickschicht Widerstandsheizer.

US 2017/280777 A1 beschreibt eine Heizeinrichtung eines Aerosolerzeugungssystems, mit einem flachen hitzebeständigen Substrat welches bevorzugt transparent ist.

Die aus dem Stand der Technik bekannten Heizelemente haben allerdings den Nachteil, dass diese Heizelemente nur mit erhöhtem fertigungstechnischem Aufwand hergestellt werden können und vergleichsweise teure Materialien zum Aufbau der Heizelemente verwendet werden müssen.

Aufgabe der vorliegenden Erfindung ist es daher, ein verbessertes Heizelement und ein Verfahren zur Herstellung eines solchen verbesserten Heizelements bereitzustellen, welche die Nachteile des Stands der Technik überwinden. Insbesondere ein Heizelement und ein Verfahren bereitzustellen, mit denen ein Heizelement kostengünstig und einfach herstellbar ist.

Diese Aufgabe wird erfindungsgemäß durch ein Heizelement gemäß dem Gegenstand des Patentanspruchs 1 und ein Verfahren gemäß dem Gegenstand des Patentanspruchs 9 gelöst.

Das erfindungsgemäße Heizelement für ein System zur Bereitstellung eines inhalierbaren Aerosols, weist hierfür auf:
einen Grundkörper aufweisend ein elektrisch isolierendes Material;
eine Heizstruktur angeordnet auf dem Grundkörper; und
eine Abdeckschicht angepasst die Heizstruktur auf dem Grundkörper zu fixieren, wobei der Grundkörper eine Hülse umfasst, dadurch gekennzeichnet, dass die Heizstruktur als Leiterbahn in eine Metallfolie eingebracht ist und die entsprechend strukturierte Metallfolie wiederum auf dem Grundkörper angeordnet ist und von der Abdeckschicht gehalten wird.

Der Grundkörper weist idealerweise eine hohe Temperaturstabilität und eine hohe thermische Leitfähigkeit auf. Weiterhin weist zumindest die Oberfläche des Grundkörpers ein elektrisch isolierendes Material mit guten elektrisch isolierenden Eigenschaften auf. Das elektrisch isolierende Material kann beispielsweise ein Aluminiumoxidmaterial, ein eloxiertes Aluminiummaterial, oder einen Stahl beschichtet mit Glasschlicker, insbesondere eine Stahlhülse beschichtet mit Glasschlicker, umfassen.

Unter dem Begriff "Heizstruktur" kann ein Heizwiderstand verstanden werden, der auf dem Grundkörper angeordnet ist und in seiner einfachsten Ausführung einen Metalldraht, auch Heizleiter genannt, aufweist. Beispielsweise kann die Heizstruktur auch in Form einer Leiterbahn, die zum Beispiel mäanderförmig verläuft, ausgebildet sein. Wenn die Leiterbahn von einem Strom durchflossen wird, entsteht durch den intrinsischen Widerstand der Leiterbahn Wärme. Abhängig von dem die Leiterbahn durchfließenden Strom kann die Heizleistung der Heizstruktur festgelegt werden. Die Heizstruktur kann auf der Außenseite des Grundkörpers angeordnet sein.

Die Heizstruktur kann beispielsweise durch Siebdrucken und/oder Tape Casting, oder auch als freistehende Struktur auf dem Grundkörper angeordnet werden.

Unter dem Begriff "Abdeckschicht" kann eine elektrisch isolierende Schicht, wie beispielsweise ein Glasmaterial verstanden werden, das auf den Grundkörper und die Heizstruktur aufgebrannt wird. Beispielsweise kann das Brennen bei mindestens 850°C für mindestens 1 Stunde stattfinden.

Alternativ hierzu kann die Abdeckschicht auch ein Spritzgussteil aus temperaturbeständigem Kunststoff sein, das auf den Grundkörper und die Heizstruktur aufgepresst wird und die Heizstruktur auf dem Grundkörper fixiert.

Der Erfindung liegt die überraschende Erkenntnis zu Grunde, dass eine einfache und kostengünstige Herstellung des erfindungsgemäßen Heizelements erreicht werden kann.

In einem Beispiel ist der Grundkörper rohrförmig ausgestaltet.

Beispielsweise kann das Rohr einen Durchmesser von kleiner oder gleich 20 mm haben und einen runden, ellipsoiden, drei- oder mehrwinkligen Querschnitt aufweisen. Die Heizstruktur und die Abdeckschicht sind in diesem Beispiel entsprechend rohrförmig ausgestaltet. Die Substanz zur Bildung des Aerosols kann beispielsweise in der Mitte des Rohres angeordnet werden.

In einem weiteren Beispiel umfasst der Grundkörper ein Aluminiumoxidmaterial, ein eloxiertes Aluminiummaterial, oder einen Stahl beschichtet mit Glasschlicker, insbesondere eine Stahlhülse beschichtet mit Glasschlicker.

Ein Grundkörper aus einem Aluminiumoxidmaterial oder aus einem eloxierten Aluminiummaterial bietet ein günstiges Ausgangsmaterial mit sehr guten thermischen Eigenschaften. Alternativ kann auch ein Grundkörper aus Stahl bereitgestellt werden, der mit Glasschlicker beschichtet ist.

Der Grundkörper umfasst eine Hülse.

In einem Beispiel umfasst der Grundkörper:
- eine eloxierte Aluminiumfolie, bevorzugt mit einer Stärke von 0,1 bis 0,7 mm, wobei die eloxierte Aluminiumfolie mit darauf angeordneter Heizstruktur in Hülsenform aufgerollt ist, insbesondere mit einem Außendurchmesser von 5 bis 15 mm aufgerollt ist, oder
- ein gebranntes Aluminiumoxidmaterial oder ein Keramikspritzgussteil.

Die Hülse kann beispielsweise einen Außendurchmesser von 5 bis 15 mm und eine Wandstärke von 0,1 bis 0,7 mm haben. Das Aufrollen der eloxierten Aluminiumfolie kann derart erfolgen, dass die Stoßkanten der Folie miteinander verbunden, beispielsweise verschweißt werden, damit eine geschlossene Hülse entsteht. In einem alternativen Beispiel werden die Stoßkanten nicht verbunden und bleiben offen. In noch einem weiteren Beispiel kann sich die Folie an ihren Stoßkanten überlappen und/oder in mehreren Wicklungen aufgewickelt sein.

Die Heizstruktur ist:
- als strukturierte Metallfolie auf dem Grundkörper angeordnet.

Die Heizstruktur wird als Leiterbahn in eine Metallfolie eingebracht und die entsprechend strukturierte Metallfolie wird wiederum auf dem Grundkörper angeordnet und von der Abdeckschicht gehalten.

In diesem Beispiel kann die strukturierte Metallfolie einen Mäander aufweisen und zumindest eine Teilfläche einer Leiterbahn des Mäanders weist eine Rundung auf, die einer Rundung eines Außendurchmessers des Grundkörpers entspricht.

Vorteilhaft kann die strukturierte Metallfolie durch eine solche Ausgestaltung wie eine Blattfeder wirken und damit den thermischen Kontakt zum Grundkörper verbessern.

In einem weiteren Beispiel umfasst die Abdeckschicht:
- eine eingebrannte Glasschicht, oder
- ein Spritzgussteil aus temperaturbeständigem Kunststoff, insbesondere umfassend ein PEEK-, PPS-, oder PTFE-Material, bevorzugt ist das Spritzgussteil auf den Grundkörper und die Heizstruktur aufgepresst.

Durch die Fixierung mit dem Spritzgussteil kann das Heizelement besonders einfach und kostengünstig hergestellt werden, da das Einbrennen der Abdeckschicht entfallen kann.

In noch einem Beispiel weist das Heizelement zumindest ein Temperatursensor auf, angeordnet auf der Heizstruktur, bevorzugt zwei Temperatursensoren, insbesondere ein PT1000 mit zwei Zuleitungen, wobei die Zuleitungen als Flachbandzuleitungen oder Drahtzuleitungen ausgestaltet sind, und wobei die Zuleitungen axial oder parallel zueinander angeordnet sind und zumindest ein Platinmaterial, ein Nickelmaterial, ein Eisenmaterial, ein Kupfermaterial oder ein Messingmaterial umfassen, bevorzugt sind die Zuleitungen mit Gold, Silber oder Platin beschichtet, und wobei die Abdeckschicht eine Umhüllung für den Temperatursensor aufweist.

Der Temperatursensor kann beispielsweise mit einer Auswerteelektronik verbunden sein und die momentane Temperatur der Heizstruktur an die Auswerteelektronik übermitteln.

Vorteilhaft erlaubt der in diesem Beispiel beschriebene Temperatursensor mit flachen Zuleitungen eine besonders platzsparende Anordnung. Weiterhin vorteilhaft erlaubt die Umhüllung in der Abdeckschicht eine gute Fixierung des Temperatursensors auf der Heizstruktur, sowie eine gute thermische Abschirmung nach außen. In diesem Zusammenhang kann unter dem Begriff "Umhüllung" eine Vertiefung in der Abdeckschicht verstanden werden, welche die äußere Geometrie des Temperatursensors zumindest teilweise umschließt.

In einem Beispiel weist die Heizstruktur eine strukturierte Stahllegierung, eine Nickel-Eisen Legierung, oder eine Nickel-Chrom Legierung auf, insbesondere mit einem Widerstand von 0,4 bis 3 Ohm, bevorzugt 0,6 Ohm.

Vorteilhaft kann durch das Auswählen einer Stahllegierung für die Heizstruktur ein besonders günstiges Heizelement hergestellt werden.

Auch schlägt die Erfindung ein Verfahren zur Herstellung eines Heizelements für ein System zur Bereitstellung eines inhalierbaren Aerosols vor, aufweisend die aufeinanderfolgenden Schritte:
Bereitstellen eines Grundkörper aufweisend ein elektrisch isolierendes Material;
Anordnen einer Heizstruktur auf dem Grundkörper; und
Anordnen einer Abdeckschicht angepasst die Heizstruktur auf dem Grundkörper zu fixieren.

In einem Beispiel weist das Bereitstellen des Grundkörpers auf:
Bereitstellen eines rohrförmigen Grundkörpers, und/oder
Bereitstellen eines Grundkörpers umfassend ein Aluminiumoxidmaterial, ein eloxiertes Aluminiummaterial, oder einen Stahl beschichtet mit Glasschlicker, insbesondere eine Stahlhülse beschichtet mit Glasschlicker.

Erfindungsgemäß weist das Bereitstellen des Grundkörpers auf:
Bereitstellen des Grundkörpers als Hülse und Anordnen der Heizstruktur auf dem Grundkörper.

In noch einem Beispiel weist das Bereitstellen des Grundkörpers auf:
Bereitstellen des Grundkörpers als eloxierte Aluminiumfolie und Aufrollen des Grundkörpers mit darauf angeordneter Heizstruktur in Hülsenform, mit einem Außendurchmesser von 5 bis 15 mm.

In noch einem Beispiel weist das Bereitstellen des Grundkörpers auf:
Bereitstellen des Grundkörpers als einen Grünkörper, insbesondere als ein Keramikspritzgussteil, umfassend ein Aluminiumoxidmaterial und Brennen des Grünkörpers.

Das Anordnen der Heizstruktur weist auf:
Anordnen der Heizstruktur als strukturierte Metallfolie auf dem Grundkörper.

In noch einem Beispiel weist das Anordnen der Abdeckschicht auf:
- Einbrennen einer Glasschicht auf den Grundkörper und Heizstruktur, oder
- Anordnen eines Spritzgussteils aus temperaturbeständigem Kunststoff, insbesondere einem PEEK, einem PPS oder einem PTFE Material, bevorzugt Aufpressen des Spritzgussteils auf den Grundkörper und die Heizstruktur und/oder den Temperatursensor.

Die Erfindung schlägt auch eine Verdampfer-Einheit für ein System zur Bereitstellung eines inhalierbaren Aerosols vor, aufweisend ein erfindungsgemäßes Heizelement und/oder ein Heizelement hergestellt nach einem erfindungsgemäßen Verfahren.

Weiterhin schlägt die Erfindung ein System zur Bereitstellung eines inhalierbaren Aerosols vor, aufweisend ein erfindungsgemäßes Heizelement und/oder ein Heizelement hergestellt nach einem erfindungsgemäßen Verfahren.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigen:
- Figur 1: eine schematische Querschnittsansicht eines Heizers gemäß Ausführungsformen der Erfindung; und
- Figuren 2 und 3: Isometrieansichten eines Heizers gemäß Ausführungsformen der Erfindung.

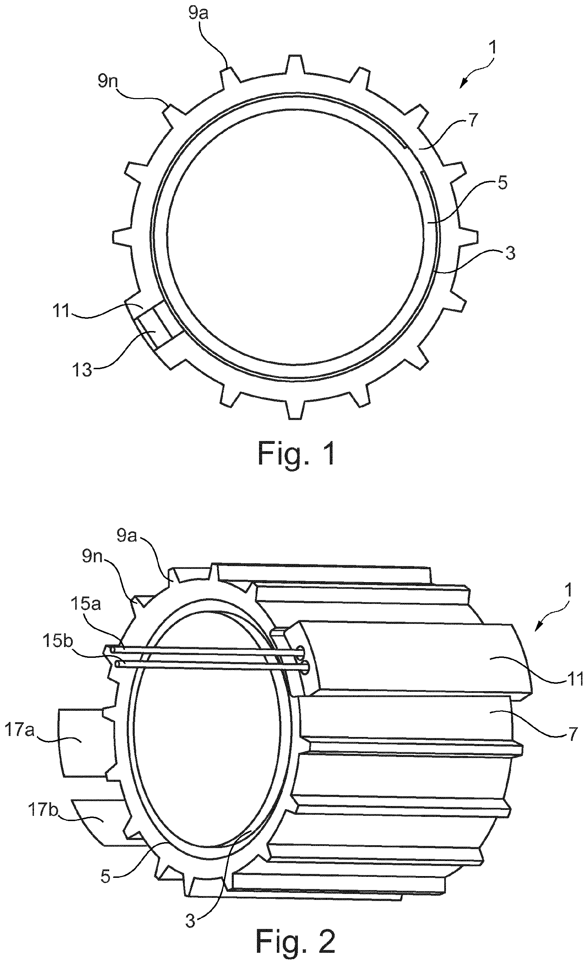

Das in den Figuren 1 bis 3 gezeigte Heizelement 1, für ein System zur Bereitstellung eines inhalierbaren Aerosols, umfasst einen rohrförmigen Grundkörper 5 mit einem elektrisch isolierenden Material, eine Heizstruktur 3 angeordnet auf dem Grundkörper 5 und eine Abdeckschicht 7 angepasst die Heizstruktur 3 auf dem Grundkörper 5 zu fixieren. Wie es in den Figuren gezeigt wird, ist die Heizstruktur 3 auf der Außenseite des Grundkörpers 5 angeordnet. Die Substanz zur Bildung des Aerosols kann im Inneren des rohrförmigen Grundkörpers 5 angeordnet werden. Weiterhin zeigt Figur 1 stabförmige Kühlkörper 9a - 9n, die um den Außenumfang der Abdeckschicht 7 angeordnet sind. Der Fachmann weiß aber, dass diese Kühlkörper 9a - 9n nicht essentiell für die Erfindung sind.

Auch zeigt Figur 1 einen Temperatursensor 13, der auf der Heizstruktur 3 angeordnet ist und eine Umhüllung 11 in der Abdeckschicht 7, um den Temperatursensor 13 auf bzw. an der Heizstruktur 3 zu befestigen.
Der gezeigte Grundkörper 5 kann in einer ersten Ausführungsform ein eloxiertes Aluminium-Röhrchen mit einem Außendurchmesser von 5 - 15 mm und einer Wandstärke von 0,1 - 0,7 mm sein. Die Aluminiumoxidschicht hat eine Dicke von 5 - 50 µm und dient als elektrisch isolierende Unterlage. Auf ein eloxierte Aluminium-Röhrchen kann die Heizstruktur 3, in allgemein bekannter Weise, aufgebracht werden mittels:
a) Siebdruck oder Tampondruck einer Metallpaste und anschließendes Einbrennen
b) Ganzflächiges Aufbringen einer Metallschicht, z.B. durch Aufdampfen, Dip-coating und anschließende Laserstrukturierung
c) Photostrukturierbare Pasten, insbesondere Dickschichtpasten (Tauchen, Sprühen) und anschließende Strukturierung über einen Photolithographieprozess.

Auf das eloxierte Aluminium-Röhrchen kann die Heizstruktur 3 optional aufgebracht werden mittels: Aufpressen/Aufkleben einer strukturierten Metallfolie, z.B. ausgestanzt.

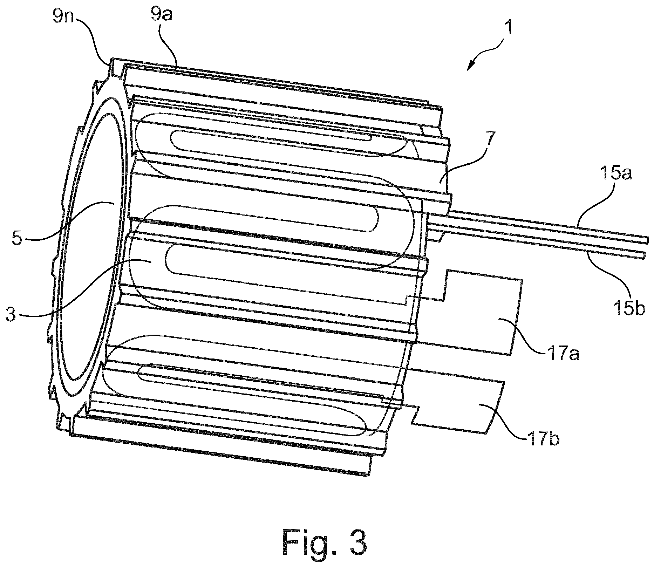

In Figur 3 ist die Abdeckschicht 7 transparent dargestellt, um die darunterliegende Heizstruktur 3 sichtbar zu machen. Die gezeigte Heizstruktur 3 ist in Figur 3 mäanderförmig ausgestaltet und weist zwei Anschlusskontakte 17a, 17b auf, die mit Zuleitungsdrähten (nicht gezeigt) kontaktiert werden.

In einer nicht gezeigten Ausführungsform kann sich der Grundkörper 5 über die Anschlusskontakte 17a, 17b und über die Zuleitungen 15a, 15b des Temperatursensors 13 ausdehnen.

In einer zweiten Ausführungsform kann anstelle des zuvor beschriebenen eloxierten Aluminium-Röhrchens auch eine Aluminiumfolie als Grundkörper 5 verwendet werden. Beispielsweise kann eine Aluminiumfolie mit einer Stärke von 0,1 - 0,7 mm in Streifen geschnitten werden und anschließend eloxiert werden. Die Aluminiumoxidschicht kann eine Dicke von 5 - 50 µm haben. Auf den eloxierten Aluminiumstreifen kann die Heizstruktur 3 wie in der ersten Ausführungsform zuvor beschrieben wurde, aufgebracht werden.

In einer allgemein bekannten Ausführung kann nach dem Aufbringen der Heizstruktur 3 die Folie aufgewickelt werden, so dass eine Hülse mit einem Außendurchmesser von 5 - 15 mm entsteht. Die Stoßkanten der Folie können miteinander verbunden, beispielsweise verschweißt werden, damit eine geschlossene Hülse entsteht. Alternativ hierzu werden die Stoßkanten nicht verbunden und bleiben offen. In einer nicht gezeigten Ausführungsform kann die Folie aber auch an ihren Stoßkanten überlappen. Die Wicklung kann auch in Form von mehreren Umdrehungen erfolgen, insbesondere so, dass die Heizstruktur 3 durch eine Folienwicklung abgedeckt wird.

In einer dritten Ausführungsform kann als Grundkörper 5 ein Grünkörper aus Aluminiumoxid bereitgestellt werden und in Form eines Rohrs extrudiert und anschließend in einzelne Stücke mit der gewünschten Länge geteilt und gebrannt werden. Alternativ hierzu kann der Grünkörper als Keramikspritzgussteil gefertigt werden.

In einer vierten Ausführungsform kann eine Stahlhülse mit einer Abdeckschicht 7 aus Glasschlicker beschichtet und anschließend gebrannt werden.

In einer fünften Ausführungsform kann eine Aluminiumhülse, alternativ eine Aluminium(legierung)hülse eloxiert bis ca. 15µm oder hartanodisiert bis ca. 25µm bereitgestellt werden. Die Heizstruktur 3 kann ein erodiertes Stahl Alloy 42, eine NiCr Legierung oder ein ähnliches Material mit einem elektrischen Widerstand von 0,4 - 3 Ohm, typischerweise 0,6 Ohm sein.

Alle weiteren Verarbeitungsschritte der Ausführungsformen zwei bis fünf können denen der ersten Ausführungsform entsprechen.

Die in der vorstehenden Beschreibung, in den Ansprüchen und in den Figuren dargestellten Merkmale können sowohl einzeln als auch in beliebiger Kombination wesentlich für die Erfindung in ihren verschiedenen Ausführungsformen sein.

### Bezugszeichenliste

- 1: Heizelement
- 3: Heizstruktur
- 5: Grundkörper
- 7: Abdeckschicht
- 9a - 9n: Kühlkörper
- 11: Umhüllung
- 13: Temperatursensor
- 15a, 15b: Zuleitungen
- 17a, 17b: Anschlusskontakte

## Patentansprüche

1. Heizelement (1) für ein System zur Bereitstellung eines inhalierbaren Aerosols, aufweisend:
einen Grundkörper (5) aufweisend ein elektrisch isolierendes Material;
eine Heizstruktur (3) angeordnet auf dem Grundkörper (5); und
eine Abdeckschicht angepasst die Heizstruktur (3) auf dem Grundkörper (5) zu fixieren, wobei der Grundkörper (5) eine Hülse umfasst, **dadurch gekennzeichnet, dass** die Heizstruktur (3) als Leiterbahn in eine Metallfolie eingebracht ist und die entsprechend strukturierte Metallfolie wiederum auf dem Grundkörper (5) angeordnet ist und von der Abdeckschicht (7) gehalten wird.

2. Heizelement (1) nach Anspruch 1, **dadurch gekennzeichnet, dass** der Grundkörper (5) rohrförmig ausgestaltet ist.

3. Heizelement (1) nach einem der Ansprüche 1 oder 2, **dadurch gekennzeichnet, dass** der Grundkörper (5) ein Aluminiumoxidmaterial, ein eloxiertes Aluminiummaterial, oder einen Stahl beschichtet mit Glasschlicker, insbesondere eine Stahlhülse beschichtet mit Glasschlicker, umfasst.

4. Heizelement (1) nach einem der vorangehenden Ansprüche, **dadurch gekennzeichnet, dass** der Grundkörper (5):
eine eloxierte Aluminiumfolie umfasst, bevorzugt mit einer Stärke von 0,1 bis 0,7 mm, wobei die eloxierte Aluminiumfolie mit darauf angeordneter Heizstruktur (3) in Hülsenform aufgerollt ist, insbesondere mit einem Außendurchmesser von 5 bis 15 mm aufgerollt ist, oder
ein gebranntes Aluminiumoxidmaterial oder ein Keramikspritzgussteil umfasst.

5. Heizelement (1) nach Anspruch 4, **dadurch gekennzeichnet, dass**
die strukturierte Metallfolie einen Mäander aufweist und zumindest eine Teilfläche einer Leiterbahn des Mäanders eine Rundung aufweist, die einer Rundung eines Außendurchmessers des Grundkörpers entspricht.

6. Heizelement (1) nach einem der vorangehenden Ansprüche, **dadurch gekennzeichnet, dass** die Abdeckschicht (7):
- eine eingebrannte Glasschicht umfasst, oder
- ein Spritzgussteil aus temperaturbeständigem Kunststoff, insbesondere umfassend ein PEEK-, PPS-, oder PTFE-Material, bevorzugt ist das Spritzgussteil auf den Grundkörper und die Heizstruktur aufgepresst.

7. Heizelement (1) nach einem der vorangehenden Ansprüche, aufweisend zumindest ein Temperatursensor angeordnet auf der Heizstruktur (3), bevorzugt zwei Temperatursensoren, insbesondere ein PT1000 mit zwei Zuleitungen, wobei die Zuleitungen als Flachbandzuleitungen oder Drahtzuleitungen ausgestaltet sind, und wobei die Zuleitungen axial oder parallel zueinander angeordnet sind und zumindest ein Platinmaterial, ein Nickelmaterial, ein Eisenmaterial, ein Kupfermaterial oder ein Messingmaterial umfassen, bevorzugt sind die Zuleitungen mit Gold, Silber oder Platin beschichtet, und wobei die Abdeckschicht eine Umhüllung für den Temperatursensor aufweist.

8. Heizelement (1) nach einem der vorangehenden Ansprüche, **dadurch gekennzeichnet, dass**
die Heizstruktur (3) eine strukturierte Stahllegierung, eine Nickel-Eisen Legierung, oder eine Nickel-Chrom Legierung aufweist, insbesondere mit einem Widerstand von 0,4 bis 3 Ohm, bevorzugt 0,6 Ohm.

9. Verfahren zur Herstellung eines Heizelements (1) für ein System zur Bereitstellung eines inhalierbaren Aerosols, aufweisend die aufeinanderfolgenden Schritte:
Bereitstellen eines Grundkörpers (5) aufweisend ein elektrisch isolierendes Material,
wobei der Grundkörper (5) eine Hülse umfasst;
Anordnen einer Heizstruktur (3) als strukturierte Metallfolie auf dem Grundkörper (5),
wobei die Heizstruktur (3) als Leiterbahn in die Metallfolie eingebracht ist; und
Anordnen einer Abdeckschicht (7) angepasst die Heizstruktur (3) auf dem Grundkörper (5) zu fixieren.

10. Verfahren nach Anspruch 9, **dadurch gekennzeichnet, dass** das Bereitstellen des Grundkörpers (5) aufweist:
Bereitstellen eines rohrförmigen Grundkörpers (5), und/oder
Bereitstellen eines Grundkörpers (5) umfassend ein Aluminiumoxidmaterial, ein eloxiertes Aluminiummaterial, oder einen Stahl beschichtet mit Glasschlicker, insbesondere eine Stahlhülse beschichtet mit Glasschlicker.

11. Verfahren nach einem der Ansprüche 9 oder 10, **dadurch gekennzeichnet, dass** das Bereitstellen des Grundkörpers (5) aufweist:
- Bereitstellen des Grundkörpers (5) als Hülse und Anordnen der Heizstruktur auf dem Grundkörper,
- Bereitstellen des Grundkörpers (5) als eloxierte Aluminiumfolie und Aufrollen des Grundköpers (5) mit darauf angeordneter Heizstruktur (3) in Hülsenform, mit einem Außendurchmesser von 5 bis 15 mm, oder
- Bereitstellen des Grundkörpers (5) als einen Grünkörper, insbesondere als ein Keramikspritzgussteil, umfassend ein Aluminiumoxidmaterial und Brennen des Grünkörpers.

12. Verfahren nach einem der Ansprüche 9 - 11, **dadurch gekennzeichnet, dass** das Anordnen der Abdeckschicht (7) aufweist:
- Einbrennen einer Glasschicht auf den Grundkörper (5) und Heizstruktur (3), oder
- Anordnen eines Spritzgussteils aus temperaturbeständigem Kunststoff, insbesondere einem PEEK, einem PPS oder einem PTFE Material, bevorzugt Aufpressen des Spritzgussteils auf den Grundkörper (5) und die Heizstruktur (3) und/oder den Temperatursensor.

13. Heizer für eine Verdampfer-Einheit für ein System zur Bereitstellung eines inhalierbaren Aerosols, aufweisend ein Heizelement (1) nach einem der Ansprüche 1 bis 8, und/oder ein Heizelement (1) hergestellt nach einem Verfahren gemäß der Ansprüche 9 bis 12.

14. System zur Bereitstellung eines inhalierbaren Aerosols, aufweisend ein Heizelement (1) nach einem der Ansprüche 1 bis 8, und/oder ein Heizelement (1) hergestellt nach einem Verfahren gemäß der Ansprüche 9 bis 12.

## Claims

1. Heating element (1) for supplying an inhalable aerosol, comprising:
a basic body (5) comprising an electrically insulating material;
a heating structure (3) arranged on the basic body (5); and
a cover layer adapted to fix the heating structure (3) on the basic body (5),
wherein the basic body (5) comprises a sleeve, **characterised in that** the heating structure (3) is incorporated into a metallic foil as a conductor path and the accordingly structured metallic foil is in turn arranged in the basic body (5) and held by the cover layer (7).

2. Heating element (1) according to claim 1, **characterised in that** the basic body (5) is tubular in design.

3. Heating element (1) according to any one of claims 1 or 2 **characterised in that** the main body (5) is made of an aluminium oxide material, an anodised aluminium material, or a steel coated with glaze slip, more particularly a steel sleeve with glaze slip.

4. Heating element (1) according to any one of the preceding claims, **characterised in that** the basic body (5)
comprises an anodised aluminium foil, preferably with a thickness of 0.1 to 0.7 mm
wherein the anodised aluminium foil with the heating structure (3) arranged thereon is rolled up in a sleeve shape, more particularly with an outer diameter of 5 to 15 mm rolled up, or
comprises a fired aluminium oxide material or a ceramic injection moulded part.

5. Heating element (1) according to claim 4, **characterised in that** the structured metallic foil has a meander and a least one partial area of a conductor path of the meander exhibits rounding that corresponds to rounding of an outer diameter of the basic body.

6. Heating element (1) according to any one of the preceding claims, **characterised in that** the cover layer (7) :
- comprises an burned-in glass layer, or
- an injection moulded part of temperature-resistant plastic, more particularly comprising a PEEK, PPS or PTFE material, preferably the injection moulded part is pressed onto the basic body and the heating structure.

7. Heating element (1) according to any one of the preceding claims, comprising at least one temperature sensor arranged on the heating structure (3), preferably two temperature sensors, more particularly a PT 1000 with two leads, wherein the leads are configured as ribbon leads or wire leads, and
wherein the leads are arranged axially or in parallel with regard to each other and comprise at least one platinum material, a nickel material, an iron material, a copper material or a brass material, preferably the leads are coated with gold, silver or platinum, and wherein the cover layer comprises a wrapping for the temperature sensor.

8. Heating element (1) according to any one of the preceding claims, **characterised in that**
the heating structure (3) comprises a structured steel alloy, a nickel-iron alloy or a nickel-chromium alloy, more particularly with a resistance of 0.4 to 3 ohms, preferably 0.6 ohms.

9. Method of manufacturing a heating element (1) for a system for supplying an inhalable aerosol, comprising the successive steps:
provision of a basic body (5) comprising an electrically insulating material,
wherein the basic body (5) has a sleeve;
arranging of a heating structure (3) as a structured metallic foil on the basic body (5), wherein the heating structure (3) is formed as a conductor path in the metallic foil
and
arranging of a cover layer (7) adapted to fix the heating structure (3) to the basic body (5).

10. Method according to claim 9 **characterised in that** the provision of the basic body comprises:
provision of a tubular basic body (5) and/or
provision of a basic body (5) made of an aluminium oxide material, an anodised aluminium material, or a steel coated with glaze slip, more particularly a steel sleeve coated with glaze slip.

11. Method according to any one of claims 9 or 10, **characterised in that** the provision of the basic body (5) comprises
- provision of the basic body (5) as a sleeve and arranging of the heating structure on the basic body,
- provision of the basic body (5) as an anodised aluminium foil and rolling up of the basic body (5) with the heating structure (3) arranged thereon in a sleeve shape, with an outer diameter of 5 to 11 mm, or
- provision of the basic body (5) as an unfired body, more particularly as a ceramic injection moulded part, comprising an aluminium oxide material and firing of the unfired body.

12. Method according to any one of claims 9-11 **characterised in that** the arrangement of a cover layer (7) comprises:
- burning in of a glass layer on the basic body (5) and heating structure (3), or
- arranging of an injection moulded part of temperature-resistant plastic, more particularly a PEEK, a PPS or a PTFE material, preferably pressing the injection moulded part onto the basic body (5) and the heating structure (3) and/or the temperature sensor.

13. Heater for an evaporator unit for a system for supplying an inhalable aerosol, comprising a heating element (1) according to any one of claims 1 to 8 and/or a heating element (1) manufactured according to a method according to claims 9 to 12.

14. System for supplying an inhalable aerosol, comprising a heating element (1) according to any one of claims 1 to 8, and/or a heating element manufactured according to a method in accordance with claims 9 to 12.

## Revendications

1. Élément chauffant (1), destiné à un système de mise à disposition d'un aérosol inhalable, comportant:
un corps de base (5), comportant une matière électriquement isolante;
une structure chauffante (3) placée sur le corps de base (5); et
une couche de recouvrement, adaptée pour fixer la structure chauffante (3) sur le corps de base (5),
le corps de base (5) comprenant une douille, **caractérisé en ce que** la structure chauffante (3) est introduite sous la forme d'une piste conductrice dans un film métallique et **en ce que** le film métallique structuré en conséquence est quant à lui placé sur le corps de base (5) et maintenu par la couche de recouvrement (7).

2. Élément chauffant (1) selon la revendication 1, **caractérisé en ce que** le corps de base (5) est conçu de forme tubulaire.

3. Élément chauffant (1) selon l'une quelconque des revendications 1 ou 2, **caractérisé en ce que** le corps de base (5) est une matière alumine, une matière aluminium éloxée, ou un acier revêtu de barbotine de verre, notamment une douille d'acier revêtue de barbotine de verre.

4. Élément chauffant (1) selon l'une quelconque des revendications précédentes, **caractérisé en ce que** le corps de base (5):
comprend un film d'aluminium éloxé, de préférence d'une épaisseur de 0,1 à 0,7 mm,
le film d'aluminium éloxé avec la structure chauffante (3) placé dessus étant enroulé en forme de douille, notamment enroulé à un diamètre extérieur de 5 à 15 mm, ou
est une matière alumine cuite ou une pièce en céramique moulée par injection.

5. Élément chauffant (1) selon la revendication 4, **caractérisé en ce que** le film métallique structuré comporte un méandre et **en ce qu'**au moins une surface partielle d'une piste conductrice du méandre comporte un arrondi, qui correspond à un arrondi d'un diamètre extérieur du corps de base.

6. Élément chauffant (1) selon l'une quelconque des revendications précédentes, **caractérisé en ce que** la couche de recouvrement (7):
- comporte un couche de verre cuite ou
- une pièce moulée par injection en matière plastique thermorésistante, comprenant notamment une matière PEEK, PPS, ou PTFE, de préférence la pièce moulée par injection est pressée sur le corps de base et la structure chauffante.

7. Élément chauffant (1) selon l'une quelconque des revendications précédentes, comportant au moins un capteur de température placé sur la structure chauffante (3), de préférence deux capteurs de température, notamment un PT1000 pourvu de deux câbles d'alimentation, les câbles d'alimentation étant conçus sous la forme de câbles plats ou de lignes d'alimentation métalliques, et
les câbles d'alimentation étant placés en configuration axiale ou parallèle l'un par rapport à l'autre et comprenant au moins une matière à base de platine, une matière à base de nickel ou une matière à base de fer, une matière à base de cuivre ou une matière à base de laiton, les câbles d'alimentation étant revêtus de préférence d'or, d'argent ou de platine et la couche de recouvrement comportant une gaine pour le capteur de température.

8. Élément chauffant (1) selon l'une quelconque des revendications précédentes, **caractérisé en ce que**
la structure chauffante (3) comporte un alliage d'acier structuré, un alliage de nickel-fer ou un alliage de nickel-chrome, notamment d'une résistance de 0,4 à 3 ohms, de préférence de 0,6 ohm.

9. Procédé, destiné à fabriquer un élément chauffant (1) pour un système de mise à disposition d'un aérosol inhalable, comportant les étapes successives consistant à:
mettre à disposition un corps de base (5), comportant une matière isolante électrique,
le corps de base (5) comprenant une douille;
placer une structure chauffante (3) constituée sous la forme d'un film métallique structuré sur le corps de base (5), la structure chauffante (3) étant introduite sous forme de piste conductrice dans le film métallique
et
placer une couche de recouvrement (7) adaptée pour fixer la structure chauffante (3) sur le corps de base (5) .

10. Procédé selon la revendication 9, **caractérisé en ce que** la mise à disposition du corps de base (5) comporte:
la mise à disposition d'un corps de base (5) de forme tubulaire, et / ou
la mise à disposition d'un corps de base (5) comprenant une matière alumine, une matière aluminium éloxée, ou un acier revêtu de barbotine de verre, notamment une douille en acier revêtue de barbotine de verre.

11. Procédé selon l'une quelconque des revendications 9 ou 10, **caractérisé en ce que** la mise à disposition du corps de base (5) comporte:
- la mise à disposition du corps de base (5) sous la forme d'une douille et le placement de la structure chauffante sur le corps de base,
- la mise à disposition du corps de base (5) sous la forme d'un film d'aluminium éloxé et l'enroulement du corps de base (5) avec la structure chauffante (3) placée sur celui-ci sous la forme d'une douille, d'un diamètre extérieur de 5 à 15 mm, ou
- la mise à disposition du corps de base (5) sous la forme d'un corps de base, notamment sous la forme d'une pièce en céramique moulée par injection, comprenant une matière alumine et cuisson du corps de base.

12. Procédé selon l'une quelconque des revendications 9 à 11, **caractérisé en ce que** le placement de la couche de recouvrement (7) comporte:
- la cuisson d'une couche de verre sur le corps de base (5) et la structure chauffante (3), ou
- le placement d'une pièce moulée par injection en une matière plastique thermorésistante, notamment en une matière PEEK, PPS ou PTFE, de préférence, le pressage de la pièce moulée par injection sur le corps de base (5) et la structure chauffante (3) et / ou le capteur de température.

13. Dispositif de chauffe destiné à une unité d'évaporation pour un système de mise à disposition d'un aérosol inhalable, comportant un élément chauffant (1) selon l'une quelconque des revendications 1 à 8, et / ou un élément chauffant (1) fabriqué d'après un procédé selon les revendications 9 à 12.

14. Système de mise à disposition d'un aérosol inhalable, comportant un élément chauffant (1) selon l'une quelconque des revendications 1 à 8, et / ou un élément chauffant fabriqué d'après un procédé selon les revendications 9 à 12.
